(19) **Europäisches Patentamt**
**European Patent Office**
**Office européen des brevets**

(11) **EP 2 535 098 A1**

(12) **EUROPEAN PATENT APPLICATION**
published in accordance with Art. 153(4) EPC

(43) Veröffentlichungstag:
**19.12.2012 Patentblatt 2012/51**

(21) Anmeldenummer: **11740099.4**

(22) Anmeldetag: **20.01.2011**

(51) Int Cl.:
***B01D 45/12*** *(2006.01)*

(86) Internationale Anmeldenummer:
**PCT/RU2011/000022**

(87) Internationale Veröffentlichungsnummer:
**WO 2011/096846 (11.08.2011 Gazette 2011/32)**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2010 RU 2010104422**

(71) Anmelder:
• **Bindas, Valeriy Grigoryevich**
**Moscow 125950 (RU)**
• **Yuryev, Eduard Vladimirovich**
**Krasnodarskiy kray (RU)**

(72) Erfinder:
• **Bindas, Valeriy Grigoryevich**
**Moscow 125950 (RU)**
• **Yuryev, Eduard Vladimirovich**
**Krasnodarskiy kray (RU)**

(74) Vertreter: **Jeck, Anton**
**Jeck - Fleck - Herrmann**
**Klingengasse 2/1**
**71657 Vaihingen/Enz (DE)**

(54) **WIRBELROHR MIT DREIFACHFLUSS**

(57)      Die Erfindung bezieht sich auf eine Tieftemperaturbehandlung und -abscheidung, insbesondere auf Einrichtungen zur Trennung von Feinpartikeln von Gasen oder Dämpfen unter Einsatz von Zentrifugalkräften. Das Wirbelrohr weist ein Gehäuse, einen Eintrittsstutzen, einen Kaltgasaustrittsstutzen und einen Heißgasaustrittsstutzen, einen Ablassstutzen für Flüssigkeitsablass und einen Energieteiler auf. Der Eintrittsstutzen ist mit einer Methanolzufuhreinrichtung versehen. Im Gehäuse ist ein Wirbelerzeuger am Eintrittsstutzen angeordnet. In das Gehäuse sind ein Teiler und eine Scheidewand mit kegelförmiger Innenfläche eingebaut, die einen Ringkanal ausbilden. Auf der Oberfläche der Stromlinienstirnfläche des Teilers sind Nuten ausgebildet. Der Teiler ist längs der Gehäuseachse verfahrbar eingebaut und ist durch eine Feder gegen die Scheidewand angedrückt. Der Innenteil des Gehäuses und die Außenpartie des Teilers bilden eine Flüssigkeitskammer. An dem dem Gehäuse entgegengesetzten Ende des Energieteilers ist ein Entwirbler angeordnet. Der Entwirbler ist kreuzartig ausgebildet. Dabei weist der Entwirbler Vorsprünge an jeder Fläche seiner Stirnseiten auf. Der technische Effekt der Erfindung ist die Erhöhung des Nutzeffekts bei der Trennung von dispersen Partikeln.

Fig. 1.

**EP 2 535 098 A1**

**Beschreibung**

Die Erfindung betrifft ein Dreistromwirbelrohr nach dem Oberbegriff des Anspruchs 1.

Die Erfindung betrifft eine Tieftemperaturbehandlung und -abscheidung, insbesondere Einrichtungen zur Trennung von Feinpartikeln von Gasen oder Dämpfen unter Einsatz von Zentrifugalkräften, die durch eine Gasstromrichtungswendung entstehen. Die Erfindung kann in der Energiewirtschaft, in der erdölverarbeitenden, petrochemischen und chemischen Industrie verwendet werden.

Durch die RU 532385 ist ein Durchlaufabscheider bekannt. Er enthält ein mit einer Vertiefung ausgebildetes Gehäuse, eine Querwand mit Leitblechen, einen Eintritts- und einen Austrittsstutzen.

Der Mangel dieser bekannten Einrichtung ist ein niedriger Wirkungsgrad bei einer Ableitung einer Flüssigkeitsfraktion, während sie ein Leitrohr herabfließt, um einen Strom am Austritt geradezurichten.

Durch die RU 607603 ist eine Einrichtung zur Verdichtung von Pulpe bekannt. Die Einrichtung weist ein Gehäuse, eine Entladekammer, Ablaufstutzen und Leitrippen auf.

Der Mangel dieser bekannten Einrichtung ist die darin benutzte Bauweise von Schraubenleitrippen, die keinen ausreichenden Nutzeffekt bei einer Wirbelung sicherstellen.

Der nächstkommende Stand der Technik gegenüber der Erfindung ist ein Wirbelsichter nach der RU 731992, welcher ein Gehäuse mit Anschlüssen zur Einführung von einem Gasgemisch und einer Ableitung von Kondensat und Gas, eine Eintrittskamera mit einer Düse und eine Wirbelkammer aufweist.

Der Nachteil dieser bekannten Einrichtung besteht darin, dass es nicht möglich ist, eine Flüssigkeitsfraktion zu sammeln, welche sich abscheidet, wenn ein Kaltgas von einer Scheidewand aus am Kaltgasaustrittsstutzen hinausströmt. Darüber hinaus werden die Flüssigfraktion und das Gas nicht wirksam genug voneinander getrennt, wenn sie von einer zusätzlichen Wirbelkammer an einen Abscheidestutzen übergehen.

Es ist Aufgabe der Erfindung, den Nutzeffekt bei der Abtrennung der Feinpartikeln von Gasen bzw. Dämpfen zu steigern.

Die gestellte Aufgabe wird durch die Merkmale des Anspruchs 1 gelöst.

Das Dreistromwirbelrohr weist ein Gehäuse, einen Eintrittsstutzen, einen Austrittsstutzen für Kalt- und Heißgas, einen Ablassstutzen für einen Flüssigkeitsablass und einen Energieteiler auf. Dabei ist nach der Erfindung vorgesehen, dass der Eintrittsstutzen mit einer Methanolzufuhreinrichtung versehen ist,
dass ein Wirbelerzeuger am Eintrittsstutzen im Gehäuse eingebaut ist,
dass der Wirbelerzeuger in Form einer Archimedischen Spirale ausgebildet ist,
dass im Gehäuse ein Teiler und eine Scheidewand mit kegelförmiger Innenfläche angeordnet sind, die einen Ringkanal ausbilden,
dass dabei Nuten auf der Oberfläche der Stromlinienstirnfläche des Teilers ausgebildet sind, wobei die Anzahl der Nuten 2 bis 0,2 D ist und wobei D der Energieteilerdurchmesser in mm ist,
dass die Nutentiefe 0,05 D - 0,1 D, die Nutenbreite c = 0,05 D - 0,2 D, der Nutenkrümmungshalbmesser r = 3 D - 3,5 D, der Nutenablenkungswinkel a = 30 - 75° betragen,
dass der Teiler längs der Gehäuseachse verfahrbar eingebaut ist,
dass darüber hinaus der Teiler durch eine Feder an die Scheidewand mit einer Kraft G angedrückt ist, die nach folgender Formel ermittelt ist:

$$G = \frac{\rho v^2}{2} \times S \times Cosf$$

wobei p die Gasstromdichte (kg/m³), *v* die Gasstromgeschwindigkeit (m/s), *S* die Stromlinienstirnfläche des Teilers (m²), *Cosf* der Kosinus des Anströmungswinkels des Gasstroms sind,
dass der Innenteil des Gehäuses und die Außenpartie des Teilers eine Flüssigkeitskammer bilden,
dass ein Entwirbler an dem dem Gehäuse entgegengesetzten Ende des Energieteilers angeordnet ist,
dass der Entwirbler kreuzartig ausgebildet ist und sein Abstand zur Stirnfläche des Gehäuses min. 5 D und max. 12 D beträgt, wobei D der Durchmesser des Energieteilers ist,
dass dabei der Entwirbler Vorsprünge an jeder Fläche seiner Stirnseiten aufweist und die Höhe jedes Vorsprungs aus dem Bereich 1 H bis 1,5 H gewählt ist, wobei H die Materialstärke des Entwirblers ist.

Eine Methanolzufuhreinrichtung kann z. B. als eine seitlich im Eintrittsstutzen eingebohrte Röhre oder als ein Ejektor ausgebildet sein.

Die vom Anmelder durchgeführte Analyse des Stands der Technik einschließlich einer Recherche über Patentschriften und technische und Wissenschaftsdruckschriften sowie der Suche nach Informationsquellen mit Angaben über vergleichbare und der Erfindung ähnliche Erzeugnisse ergab keine Lehren oder technische Lösungen mit solchen Merkmalen, welche die Erfindung kennzeichnen oder welche den Merkmalen der Erfindung gleichwertig oder identisch sind.

Die Erfindung wird anhand eines in den Figuren dargestellten Ausführungsbeispiels näher erläutert. Es zeigen:

Fig. 1 die Gesamtansicht des Dreistromwirbelrohrs im Längsschnitt,
Fig. 2 den Teiler in Seitenansicht und die Ansicht von der Seite der Stromlinienstirnfläche,
Fig. 3 die Nut auf dem Teiler (vergrößert),
Fig. 4 den Entwirbler.

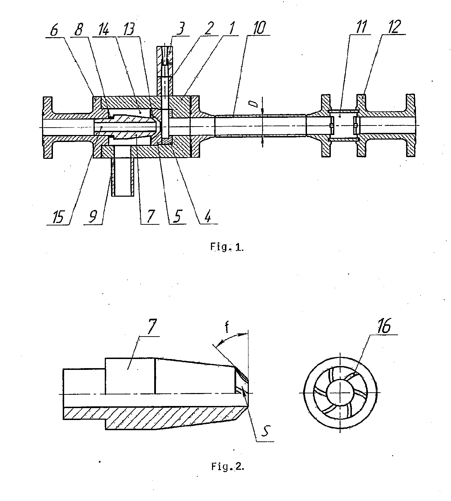

Das Dreistromwirbelrohr (Fig. 1) weist ein als Zylinder ausgebildetes Gehäuse 1 auf. Am Gehäuse 1 ist ein Eintrittsstutzen 2 angeschlossen, der mit einer Methanolzufuhreinrichtung 3 versehen ist. Die Methanolzufuhreinrichtung 3 sorgt für die Methanolversorgung eines Stroms, um ein Einfrieren einer tropfbaren Flüssigkeit vorzubeugen.

Im Gehäuse 1 sind koaxial ein Wirbelerzeuger 4 in Form einer Archimedischen Spirale und eine Scheidewand 5 mit einer kegelförmigen Innenfläche eingebaut. An einer Stirnfläche des Gehäuses 1 ist ein Kaltgasaustrittsstutzen 6 angeordnet. Eine Gegenstirnfläche des Gehäuses 1 ist mit einer Stirnfläche eines Energieteilers 10 verbunden. Die andere Stirnfläche des Energieteilers 10 ist mit einem Entwirbler 11 verbunden. Am Entwirbler 11 ist ein Heißgasaustrittsstutzen 12 koaxial befestigt. An der Zylinderoberfläche des Gehäuses 1 ist ein Ablassstutzen für einen Flüssigkeitsablass 9 befestigt.

Der Einbau der Scheidewand 5 im Gehäuse 1 sorgt für die Trennung von Heiß- und Kaltgas. Die kegelförmige Ausbildung der Oberfläche der Scheidewand 5 stellt einen gleichmäßigen Abfluss der kondensierten Flüssigkeit in einen Ringkanal 13 sicher.

Ein Teiler 7 ist in dem Kaltgasaustrittsstutzen 6 koaxial in dem Gehäuse 1 eingebaut. Die Außenoberfläche des Teilers 7 und die Innenfläche des Gehäuses 1 bilden eine Flüssigkeitskammer 14 aus. Der Teiler 7 ist mit einer Feder 8 versehen, die seine stromlinienförmige Stirnfläche gegen die Scheidewand 5 andrückt. Der Andruck G der Feder 8 wird nach folgender Formel berechnet: $G = \frac{\rho v^2}{2} \times S \times Cosf$, wobei $\rho$ die Gasstromdichte (kg/m$^3$), v die Gasstromgeschwindigkeit (m/s), S die Stromlinienstirnfläche des Teilers 7 (m$^2$), *Cosf* der Kosinus des Anströmungswinkels des Gasstroms (s. Fig. 2) sind.

Auf der Oberfläche der Stromlinienstirnfläche des Teilers 7 sind Nuten 16 (Fig. 2) ausgebildet. Sie stellen eine zusätzliche gerichtete Sammlung der Flüssigkeitsfraktion und die Abnahme der Verwirbelung am Gasablauf über einen Ringkanal 13 sicher. Das verbessert den Nutzeffekt bei der Entfernung der tropfbaren Flüssigkeit aus dem Kaltgas.

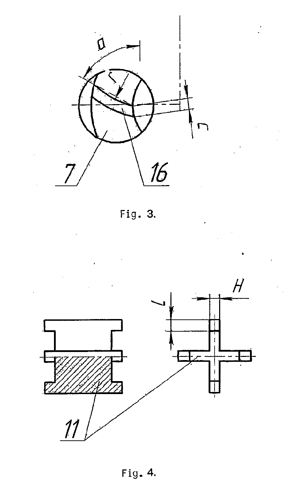

Die Kenngrößen der Nuten 16 des Teilers 7 können aus folgendem Wertebereich gewählt werden (s. Fig. 3):

Die Anzahl der Nuten ist 2 bis 0,2 D, wobei D der Durchmesser des Energieteilers 10 in mm ist.
Die Nutentiefe beträgt 0,05 D bis 0,1 D.
Die Nutenbreite (c) beträgt 0,05 D bis 0,2 D.
Der Nutenkrümmungshalbmesser (r) beträgt 3 D bis 3,5 D.
Der Nutenablenkungswinkel ($\alpha$) beträgt 30° bis 75°.

Der Entwirbler 11 ist kreuzartig ausgebildet (Fig. 4) und ist im Abstand von mindestens 5 D und max. 12 D von der Stirnfläche im Gehäuse 1 eingebaut, wobei D der Durchmesser des Energieteilers 10 ist. Die Stirnseiten des Entwirblers 11 weisen Vorsprünge an jeder Fläche auf, wobei die Höhe L der Vorsprünge aus dem Bereich 1 H bis 1,5 H gewählt ist, wobei H die Materialstärke des Entwirblers 11 ist.

Der Entwirbler 11 ist vorgesehen, um das Gemisch des Gas- und Flüssigkeitsstroms abzubremsen und das verdichtete Gas in Durchlauf-Heißgas und Gegenlauf-Kaltgas zu teilen. Die Ausbildung der Vorsprünge an jeder Stirnfläche des Entwirblers 11 stellt einen vergrößerten Gasdurchgangsquerschnitt sicher und fördert die Gastrennung von der tropfbaren Flüssigkeit.

Infolge durchgeführter Experimentalforschungen haben die Erfinder festgestellt, dass die oben genannten Wertebereiche für die Kenngrößen der Nuten 16 des Teilers 7 und des Entwirblers 11 optimal sind, um den technischen Effekt, und zwar die Verbesserung der wirksamen Trennung, zu erreichen. Die Ergebnisse mit den während der Forschungen ermittelten Nutzeffektwerten des Dreistromwirbelrohrs je nach seiner Geometrie sind der Tabelle zu entnehmen.

Funktionsweise des Dreistromwirbelrohrs

Das Druckgas wird über den Eintrittsstutzen 2 in den Wirbelerzeuger 4 gefördert. Der Wirbelerzeuger 4 ist dabei in Form einer Archimedischen Spirale ausgebildet. Unter der Wirkung von Zentrifugalkräften und des Wirbelerzeugers 4 wird das Gas verwirbelt und einwärts des Energieteilers 10 geleitet. Das Vorhandensein des Entwirblers 11 führt dazu, dass der Gaswirbelstrom im Energieteiler 10 in zwei Ströme aufgeteilt wird und zwar: einen Zentral-Gegenlaufwirbel und einen Wand-Durchlaufwirbel. Die Energieteilung erfolgt dank der Reibung des Zentral-Gegenlaufwirbels an dem Wand-Durchlaufwirbel sowie dank der Wirkung der Zentrifugalkräfte. Infolge dieses Vorgangs wird das Gas in Heiß- und Kaltgas aufgeteilt. Das Heißgas fließt über den Entwirbler 11 und den Heißgasaustrittsstutzen 12. Das Kaltgas wird durch den Zentral-Gegenlaufwirbelstrom an die Scheidewand 5 mit kegelförmiger Innenfläche geleitet. Während das Kaltgas über die Scheidewand 5 fließt, trägt es die feinsten Flüssigkeitstropfen mit. Da die Flüssigkeitsdichte die des Gases überschreitet und der Kaltlgasstrom der Einwirkung der Zentrifugalkräfte ausgesetzt ist, schlagen sich die feinsten Flüssigkeitstropfen auf der Innenfläche der Scheidewand 5 nieder und fließen über den Ringkanal 13 in die Flüssigkeitskammer 14 hinab. Von da aus fließt die abgetrennte Flüssigkeit über den Ablassstutzen für den Flüssigkeitsablass 9 hinab. Nun enthält das Kaltgas keine Flüssigkeit mehr und fließt über den Innenraum 15 des Teilers 7. Danach wird das kalte Reingas aus der Einrichtung über den Kaltgasaustrittsstutzen 6 abgeführt.

Der Einbau des Teilers 7 in das Gehäuse 1, wobei der Teiler 7 mit der Scheidewand 5 den Ringkanal 13 zur Abscheidung der flüssigen Phase bildet, ermöglicht es, die Flüssigkeit vom Kaltgas zu trennen und sie aus dem Hochgeschwindigkeitsbereich an der Kaltgasaustrittsstelle abzuführen. Diese Flüssigkeit setzt sich während des Kondensationsvorgangs frei, wenn die Druckgastemperatur am Eintritt sinkt.

Dank den im Strom entstehenden Einzelwiderständen stellen die Nuten 16 die Ausrichtung des Stroms nach einer optimalen Laufbahn sicher. Das bedingt nicht nur die Verminderung von Strömungsverlusten im Ringkanal 13 sondern auch die optimale Flüssigkeitsverteilung im Gasstrom am Eintritt in die Flüssigkeitskammer 14. Darüber hinaus haben die Nuten 16 die Funktion eines Tropfensammlers (Coalescer) für die im Gasstrom vorhandenen Flüssigkeitstropfen. Das ermöglicht, die Abscheidung von Flüssigkeitstropfen ohne zusätzlichen Energieaufwand zu verbessern.

Das Vorhandensein der durch die Innenfläche des Gehäuses 1 und die Außenoberfläche des Teilers 7 ausgebildeten Flüssigkeitskammer 14 ermöglicht, einen Pufferraum zu bekommen, um die Flüssigkeit zu beruhigen, nachdem sie den Ringkanal 13 zwecks Abscheidung der Flüssigkeitsfraktion passiert hat.

Die Ausbildung des Wirbelerzeugers 4 in Form einer Archimedischen Spirale sorgt für eine optimale Stromwirbelung. Das leitet stabile Heiß- und Kaltgasströmungen im Wand- und im Zentralbereich des Energieteilers 10 ein.

Der technische Effekt, und zwar die Nutzeffektsteigerung bei der Abtrennung der Feinpartikeln von Gasen bzw. Dämpfen, wird in der Erfindung dadurch erreicht, dass das Dreistromwirbelrohr ein Gehäuse, einen Eintrittsstutzen, Austrittsstutzen für Kalt- und Heißgas, einen Ablassstutzen für Flüssigkeitsablass und einen Energieteiler enthält. Dabei:

ist der Eintrittsstutzen mit einer Methanolzufuhreinrichtung versehen,

ist ein Wirbelerzeuger am Eintrittsstutzen in das Gehäuse eingebaut und in Form einer Archimedischen Spirale ausgebildet,

sind im Gehäuse ein Teiler und eine Scheidewand mit kegelförmiger Innenfläche angeordnet, die einen Ringkanal ausbilden. Dabei sind Nuten auf der Oberfläche der Stromlinienstirnfläche des Teilers ausgebildet. Die Anzahl der Nuten 16 ist 2 bis 0,2 D, wobei D der Energieteilerdurchmesser in mm ist. Die Nutentiefe beträgt 0,05 D bis 0,1 D, die Nutenbreite c = 0,05 D bis 0,2 D, der Nutenkrümmungshalbmesser r = 3 D bis 3,5 D und der Nutenablenkungswinkel $\alpha$ = 30 bis 75°. Dabei ist der Teiler längs der Gehäuseachse verfahrbar eingebaut, wobei der Teiler durch eine Feder an die Scheidewand mit einer Andruckkraft G angedrückt wird. Der Andruck G wird nach der folgenden Formel ermittelt:

$$G = \frac{\rho v^2}{2} \times S \times Cosf$$

wobei p die Gasstromdichte (kg/m$^3$), v die Gasstromgeschwindigkeit (m/s), S die Stromlinienstirnfläche des Teilers (m$^2$), *Cosf* der Kosinus des Anströmungswinkels des Gasstroms sind,

bilden der Innenteil des Gehäuses und die Außenpartie des Teilers eine Flüssigkeitskammer,

ist an dem dem Gehäuse entgegengesetzten Ende des Energieteilers ein Entwirbler angeordnet. Der Entwirbler ist kreuzartig ausgebildet und sein Abstand zur Stirnfläche des Gehäuses beträgt min. 5 D und max. 12 D, wobei D der Durchmesser des Energieteilers ist. Dabei weist der Entwirbler Vorsprünge an jeder Fläche seiner Stirnseiten auf. Die Höhe jedes Vorsprungs wird aus dem Bereich 1 H bis 1,5 H gewählt, wobei H die Materialstärke des Entwirblers ist.

Das Dreistromwirbelrohr nach der Erfindung kann unter Einsatz von handelsüblichen Materialien gefertigt und in einem beliebigen Maschinenbaubetrieb hergestellt werden. Das Dreistromwirbelrohr kann seine Anwendung in der Energiewirtschaft, in der erdölverarbeitenden, petrochemischen und chemischen Industrie finden.

Schriftennachweis

    1. Erfinderzertifikat RU 532385, IPC B01 D45/12, 1976.10.25.
    2. Erfinderzertifikat RU 607603, IPC B01C5/103, 1978.05.25
    3. Erfinderzertifikat RU 731992, IPC B01D45/12, 1980.05.05

Tabelle 1 - Forschungsergebnisse

| Werte | | Nutzeffekt, % (Werte) |
|---|---|---|
| Abstand des Entwirblers | 12D | 94, 95, 95, 95, 96, 96, 96, 96, 96, 95, 95, 96, 96, 95, 96, 95, 95, 94 |
| | 9D | 97, 98, 98, 97, 98, 99, 99, 99, 99, 99, 99, 99, 99, 99, 98, 99, 99, 97 |
| | 7D | 85, 85, 85, 84, 85, 86, 87, 88, 88, 88, 90, 93, 95, 91, 91, 96, 97, 91 |
| | 5D | 70, 71, 71, 72, 73, 75, 75, 76, 77, 77, 78, 78, 79, 78, 79, 79, 83, 77 |
| Winkel, Grad | 75 | -, 94, 93, 90, 92, 93, 93, 93, 93, 93, 91, 93, 92, 92 |
| | 60 | -, 99, 99, 98, 97, 98, 99, 99, 98, 99, 99, 99, 99, 98 |
| | 40 | -, 96, 96, 96, 96, 97, 99, 99, 97, 98, 99, 98, 98, 97 |
| | 30 | -, 91, 92, 95, 95, 96, 97, 99, 95, 97, 99, 96, 96, 96 |
| Halbmesser | 3,5D | -, 98, 97, 96, 95, 95, 97, 97, 96, 98, 99 |
| | 3,25D | -, 95, 96, 99, 97, 98, 99, 99, 98, 99, 99 |
| | 3D | -, 87, 87, 92, 93, 93, 94, 95, 95, 98, 99 |
| Nutentiefe | 0,1D | -, 93, 94, 97, 91, 93, 95, 97 |
| | 0,075D | -, 84, 85, 89, 82, 85, 85, 87 |
| | 0,05D | -, 71, 73, 75, 72, 75, 75, 77 |
| Nutenbreite | 0,2D | -, 87, 89, 93 |
| | 0,15D | -, 82, 83, 88 |
| | 0,1D | -, 78, 80, 82 |
| | 0,05D | -, 71, 73, 78 |
| Anzahl der Nuten | 2, 1, 0 | |

Werte (untere Achse): 0, 1, 2, 0,2D, 0,05D, 0,1D, 0,15D, 0,2D, 0,05D, 0,075D, 0,1D, 3D, 3,25D, 3,5D, 30, 40, 60, 75

**Patentansprüche**

**1.** Dreistromwirbelrohr mit einem Gehäuse (1), einem Eintrittsstutzen (2), Austrittsstutzen für Kalt- (6) und Heißgas (12), einem Ablassstutzen (9) für Flüssigkeitsablass und einem Energieteiler (10),
**dadurch gekennzeichnet,**
**dass** der Eintrittsstutzen (2) mit einer Methanolzufuhreinrichtung (3) versehen ist,
**dass** ein Wirbelerzeuger (4) am Eintrittsstutzen (2) im Gehäuse (1) eingebaut und in Form einer Archimedischen Spirale ausgebildet ist,

**dass** im Gehäuse (1) ein Teiler (7) und eine Scheidewand (5) mit kegelförmiger Innenfläche angeordnet sind, die einen Ringkanal (13) ausbilden,

**dass** auf der Oberfläche der Stromlinienstirnfläche des Teilers (7) Nuten (16) ausgebildet sind, wobei die Anzahl der Nuten (16) 2 bis 0,2 D ist, wobei D der Durchmesser des Energieteilers (10) in mm ist und die Nutentiefe 0,05 D bis 0,1 D, die Nutenbreite c = 0,05 D bis 0,2 D, der Nutenkrümmungshalbmesser r = 3 D bis 3,5 D und der Nutenablenkungswinkel $\alpha$ = 30 bis 75° beträgt,

**dass** der Teiler (7) dabei längs der Achse des Gehäuses (1) verfahrbar eingebaut ist, wobei er mittels einer Feder (8) gegen die Scheidewand (5) mit einer Andruckkraft G angedrückt ist, die nach folgender Formel ermittelt ist:

$G = \dfrac{\rho v^2}{2} \times S \times Cosf$, wobei p die Gasstromdichte (kg/m$^3$), v die Gasstromgeschwindigkeit (m/s), S die Stromlinienstirnfläche des Teilers (7) in m$^2$, *Cosf* der Kosinus des Anströmungswinkels des Gasstroms sind,

**dass** der Innenteil des Gehäuses (1) und die Außenpartie des Teilers (7) eine Flüssigkeitskammer (14) bilden,

**dass** an dem dem Gehäuse (1) entgegengesetzten Ende des Energieteilers (10) ein Entwirbler (11) angeordnet ist, wobei der Entwirbler (11) kreuzartig ausgebildet ist und sein Abstand zur Stirnfläche des Gehäuses (1) min. 5 D und max. 12 D beträgt, wobei D der Durchmesser des Energieteilers (10) ist und dass dabei der Entwirbler (11) Vorsprünge an jeder Fläche seiner Stirnseiten aufweist und die Höhe (L) jedes Vorsprungs aus dem Bereich 1 H bis 1,5 H gewählt ist, wobei H die Materialstärke des Entwirblers (11) ist.

2. Dreistromwirbelrohr nach Anspruch 1,
   **dadurch gekennzeichnet,**
   **dass** die Methanolzufuhreinrichtung (3) als eine seitlich im Eintrittsstutzen (2) eingebohrte Röhre ausgebildet ist.

3. Dreistromwirbelrohr nach Anspruch 1,
   **dadurch gekennzeichnet,**
   **dass** die Methanolzufuhreinrichtung (3) als ein Ejektor ausgebildet ist.

Fig. 1.

Fig. 2.

Fig. 3.

Fig. 4.

## INTERNATIONAL SEARCH REPORT

| International application No. |
| --- |
| PCT/RU 2011/000022 |

A.   CLASSIFICATION OF SUBJECT MATTER

B01D 45/12 (2006.01)

According to International Patent Classification (IPC) or to both national classification and IPC

B.   FIELDS SEARCHED

Minimum documentation searched (classification system followed by classification symbols)

B01D 45/00, 45/12, 45/16, F25B 9/02, 9/04, F25J 3/06

Documentation searched other than minimum documentation to the extent that such documents are included in the fields searched

Electronic data base consulted during the international search (name of data base and, where practicable, search terms used)

Esp@cenet, EAPATIS, Internet

C.   DOCUMENTS CONSIDERED TO BE RELEVANT

| Category* | Citation of document, with indication, where appropriate, of the relevant passages | Relevant to claim No. |
| --- | --- | --- |
| A | RU 2170891 C1 (GOSUDARSTVENNOE UNITERNOE PREDPRIYATE "AVIAGAZ-SOYUZ" (DOCHERNEE PREDPRIYATIE KOKB "SOYUZ")) 20.07.2001 | 1-3 |
| A | SU 731992 A (MOSKOVSKY ENERGETICHESKY INSTITUT) 05.05.1980 | 1-3 |
| A | RU 2232359 C2 (GOSUDARSTVENNOE UNITERNOE PREDPRIYATE "AVIAGAZ-SOYUZ" (DOCHERNEE PREDPRIYATIE KOKB "SOYUZ")) 10.07.2004 | 1-3 |
| A | US 5976227 A (FILTAN FILTER-ANLAGENBAU GMBH) 02.11.1999 | 1-3 |
| A | GB 1565982 A (REDPOINT ASSOCIATES LIMITED) 30.04.1980 | 1-3 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 May 2011 (18.05.2011) | 26 May 2011 (26.05.2011) |

| Name and mailing address of the ISA/ | Authorized officer |
| --- | --- |
| | |
| Facsimile No. | Telephone No. |

Form PCT/ISA/210 (second sheet) (July 1998)

**EP 2 535 098 A1**

**IN DER BESCHREIBUNG AUFGEFÜHRTE DOKUMENTE**

**In der Beschreibung aufgeführte Patentdokumente**

- RU 532385
- RU 607603
- RU 731992